# EUROPEAN PATENT APPLICATION

(11) **EP 2 336 651 A2**
(43) Date of publication of application: **22.06.2011**
(21) Application number: 10194089.8
(22) Date of filing: 08.12.2010
(51) Int. Cl.: F24D 11/00, F24H 9/02

(54) **Module and system for providing heating to a building**

(30) Priority: 08.12.2009 SE 0950941
(71) Applicant: Durado Aktiebolag, 132 38 Saltsjö-Boo (SE)
(72) Inventor: Tullstedt, Carl, 132 35 Saltsjö-Boo (SE)
(74) Representative: Bergström, Johan Erik

(57) **Abstract**

The present invention relates to a module (10) for heating a building, which module (10) comprises a boiler with a pellets burner (42); a pellets storage space (26), which pellets storage space (26) is provided with a pellets filling connection (28); pellets feeding means (36, 40) between said pellets storage space (26) and said pellets burner (43); piping (53) connected to said boiler (42) and connectable to heat delivery members (64, 66) arranged inside said building, and; solar panels (52) connected to said piping. The invention is characterised in that said module (10) is designed to be placed adjacent a wall of said building, and wherein said boiler (42) is positioned in said module with its front towards a free side (24) of the module. The invention also relates to a system comprising said module as well as solar panels.

## Description

### TECHNICAL AREA

The present invention relates to a system for heating a building and in particular to a modular compact system for connecting to a building.

### BACKGROUND OF INVENTION

Alternative and environmentally friendly systems for heating buildings have been developed during the last 30 years, where some have gained quite a lot of success.

Among these, the heating pumps have become very popular, by which heat may be derived from lakes, air or ground. However the initial costs for installing the system and placing of the piping in the water or in the ground are high. Also the system requires electricity for the operation of the pumps, whereby these systems still are dependent on the prices of electricity.

Other systems are so called pellets systems, where compacted sawdust, formed to pieces, pellets, are burnt in a boiler. The pellets system also comprises a storage of pellets placed generally close to the boiler. A drawback with this type of system is that it requires quite a lot of space for both the heater and the storage, in particular since three m³ of pellets corresponds to one m³ of oil, whereby a standard villa requiring 20 000 kWh for heating and warm water consumes about five to six m³ per year. Thus, many buildings do not have the space inside to house such a system.

Another technology that has gained some interest is solar energy where solar panels are placed on the roofs of the buildings. Many of the above mentioned systems may be combined with solar panels as a complement especially during the summer where the solar panels can provide warm water without the use of the rest of the system.

Some attempts to provide solutions with pellets burners combined with solar panels that take into account the space requirements have been made. For example the company Janfire has developed a stand-alone unit in the form of a cabin having an area of about 13 m² in which heating system comprising a boiler, a storage container and an accumulator are placed. Solar panels are placed on the roof and connected to the system. The cabin is placed beside the house to be heated and then the heating system is connected to the heating system of the house with insulated pipes via a tunnel dug in the ground.

The drawback with this system is that it requires quite a large piece of land due to the size of the cabin, and that it preferably is not placed too close to the building, which otherwise would interfere with the appearance of the house. Further the style of the cabin does not go well together with some house designs, making it unattractive for some applications.

There is thus still a demand for easy to install, attractive, cost-effective and compact systems that combine pellets with solar energy.

### BRIEF DESCRIPTION OF INVENTION

The aim of the present invention is to provide a system combining pellets burning with solar panels that is attractive as an environmental friendly solution avoiding the drawbacks of the state of the art.

This aim is obtained by the present invention as defined by the independent patent claim. Preferable embodiments of the invention form the subject of the dependent patent claims.

According to a main aspect of the invention, it is characterised by a module for heating a building, which module comprises a boiler with a pellets burner; a pellets storage space, which pellets storage space is provided with a pellets filling connection; pellets feeding means between said pellets storage space and said pellets burner; piping connected to said boiler and arranged with connection members connectable to heat delivery members arranged inside said building; characterised in that said module is designed to be placed adjacent a wall of said building, and wherein said boiler is positioned in said module with its front towards a free side of the module.

According to a further aspect of the invention, the boiler is designed such that it requires access only from its front and from its top.

According to another aspect of the invention, said pellets storage space is placed inside said module adjacent and beside said boiler and wherein said pellets feeding means comprises a generally vertically arranged feeding screw

According to yet another aspect of the invention, said module is designed such that said pellets storage space can be placed optionally on either side of said boiler for facilitating connection to said pellets filling connection when filling the storage space with pellets.

According to another further aspect of the invention, said piping from said building is drawn through a passage in a floor plate of said module.

According to a further aspect of the invention, it further comprises at least one accumulator tank connected to said piping.

According to yet a further aspect of the invention, said accumulator tank is positioned adjacent said boiler on the opposite side as the pellets storage space.

According to another aspect of the invention, it further comprises a control system capable of automatically running the heating process.

According to yet another aspect of the invention, it further comprises a heat exchanger connected to said piping, to which a swimming pool circuit may be connected.

According to a further aspect of the invention, it further comprises a chimney, provided with a mounting bracket for attachment to the building, which mounting bracket is provided with dampening means allowing slow movements but preventing fast wind loads.

The present invention is also characterised by a system for heating a building comprising said module as well as solar panels.

There are a number of advantages with the present invention. One major advantage is the positioning of the boiler in relation to the module when the latter is placed adjacent a wall of the building to be heated. Because the boiler is placed such that its front side is easily accessible from the outside service and maintenance is simplified. This also means that the size of the module can be held very compact since the conventional demands of a minimum distance of one meter to other components can be omitted. The size may further be held compact because there is no need for access of the boiler from the sides, for e.g. removing ash.

Seen with an energy aspect, an optimal solution is to have a system according to the present invention where energy from both pellets and from the sun are used, which a number of studies have concluded. For example when looking at the yearly costs for heating a building, including fixed and variable costs, pellets and sun are the most cost efficient. Also when looking at the environmental impact that different systems have, e.g. CO₂ equivalents (kg/year), again pellets and sun have the lowest impact.

Further, the module is very space efficient since the pellets storage space is placed beside, adjacent, the boiler and wherein a vertical feed screw is utilized. The system allows the components to be mirrored, i.e. placing the pellets storage space on either side of the boiler, which is an advantage when the module is placed adjacent a building. The side is then chosen such that filling of the pellets storage space is easily facilitated.

Preferably the module of the system is also arranged with an accumulator tank in which heated water from the pellets boiler and the solar panels are stored. The accumulator tank, or tanks, if more than one is required, is/are placed adjacent the boiler on the opposite side as the pellets storage space.

The system further comprises a control system for automatically controlling the heating process, which also is an advantage since the user should not be forced to use or control the system once the initial settings have been made. Another advantage is the option to have a heat exchanger in the module, whereby it is possible to heat a swimming during the summer with heat from the solar panels.

In order to ascertain a good and safe function the chimney is connected to the housing with a flexible mounting bracket that admits slow movements but prevent fast movements.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
- Fig. 1: schematically shows the present invention connected to a building,
- Fig. 2: is a cross-sectional side view of a module according to the present invention,

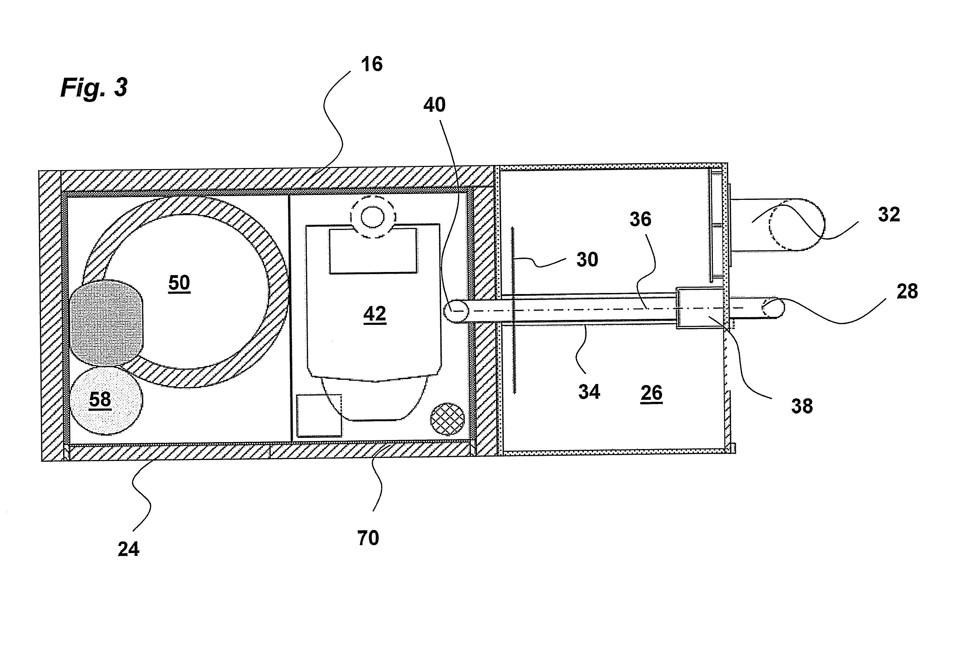

- Fig. 3: is a cross-sectional top view of the module of Fig. 2,

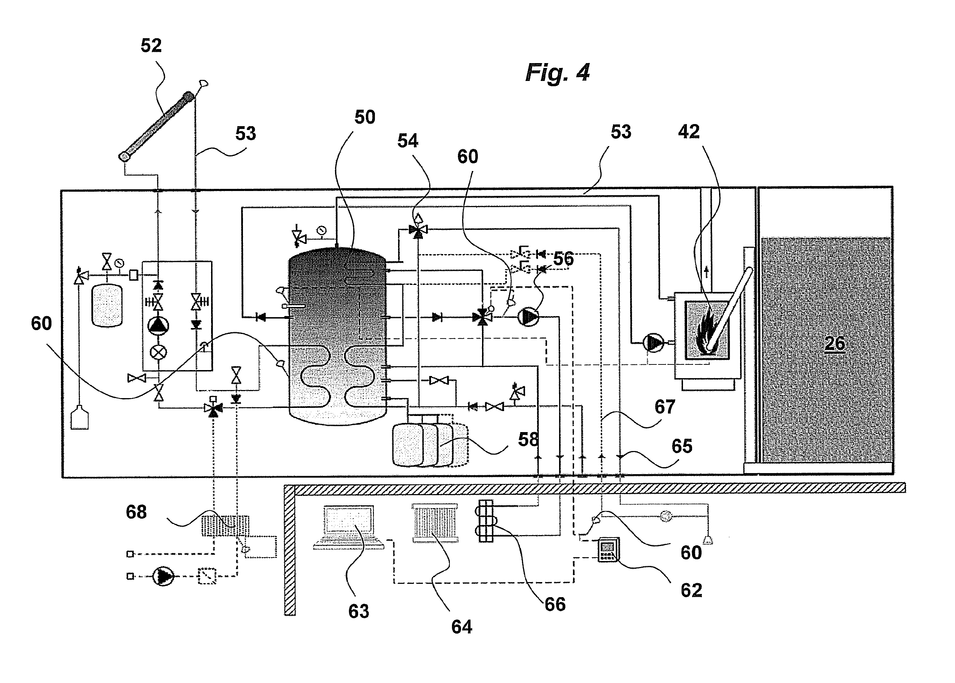

- Fig. 4: shows a circuit diagram over the system, and

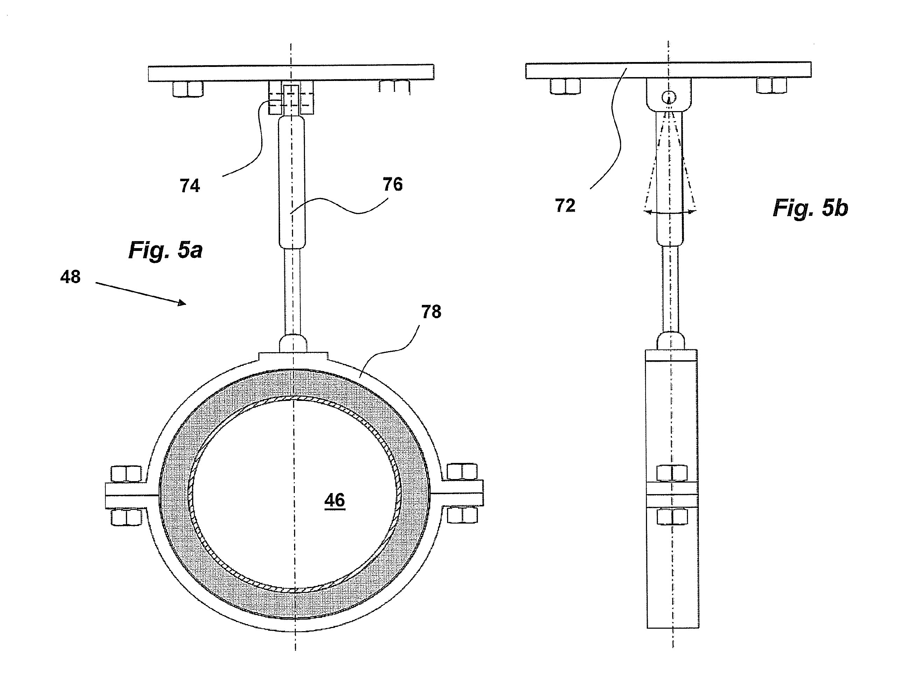

- Figs. 5a,b: shows a chimney mounting member.

### DETAILED DESCRIPTION OF THE INVENTION

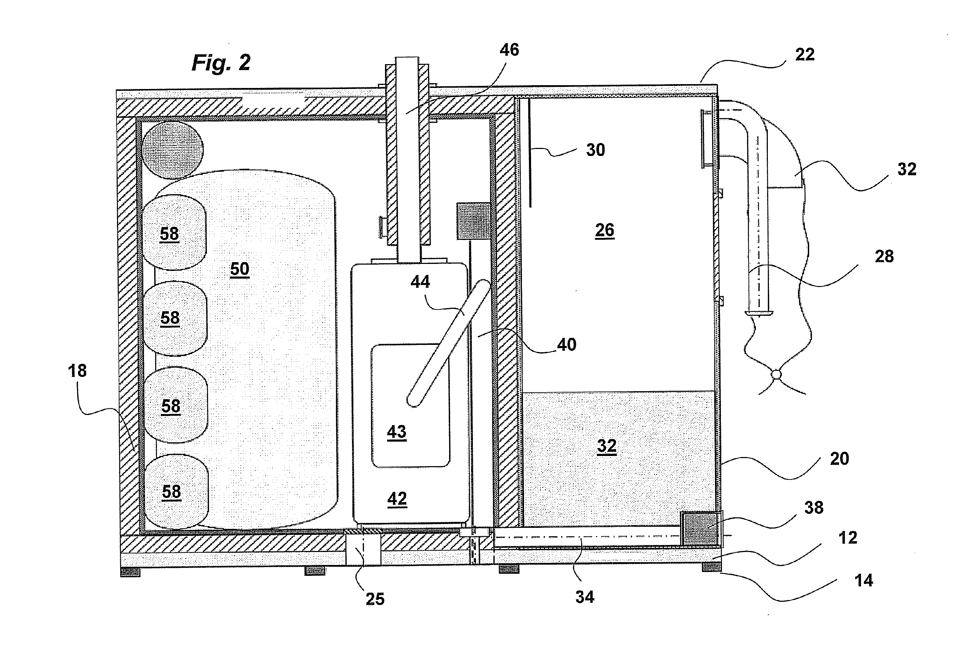

The system according to the present invention comprises a module 10 that is intended to be placed outdoors adjacent a house to be heated. The module 10 has a floor plate 12, Fig. 2, and may have feet 14 on which the module 10 stands. It may also be placed on a foundation or on plinths. The module further has a back wall 16, two side walls 18, 20, a roof 22 and a front wall 24 defining a space for the equipment of the module. The floor plate is provided with openings (25) through which piping is intended to run for connection between the piping and equipment of the module and the heating system of the house. Preferably the piping is run in a culvert in the ground and is insulated. The opening of the culvert under the floor plate is preferably sealed for preventing water from entering the culvert. The advantage with having the piping from the ground and up through the floor panel is that possible movement of the module due to e.g. settling of the ground does not affect the piping as it would if the piping ran through the wall of the building and through a side wall of the module. In this respect the sealing of the culvert is done with a material that allows some movement of the piping in the horizontal direction.

One area of the module is provided with a storage space for pellets 26, which storage space preferably is arranged with an inlet 28 for filling of pellets, preferably with a connection end piece such that a hose from a pellets tank lorry can be connected during filling of the pellets. Inside the space and facing the inlet opening is preferably a flexible member 30, such as a rubber cloth, which dampens the movement of the incoming pellets during filling, and thus dampens the sound as well as preventing the pellets of being crushed. An aerating outlet 32 is also provided to the pellets storage space. The bottom of the pellets storage space 26 is arranged with surfaces 32 that slope towards a trough 34. The trough 34 is provided with a feeding screw 36, which in turn is connected to a motor 38 at one end thereof. The trough 34 of the feeding screw extends out of the pellets storage space and connects to a second feeding screw 40, which is arranged in a vertically directed tubing, capable of feeding pellets vertically upwards.

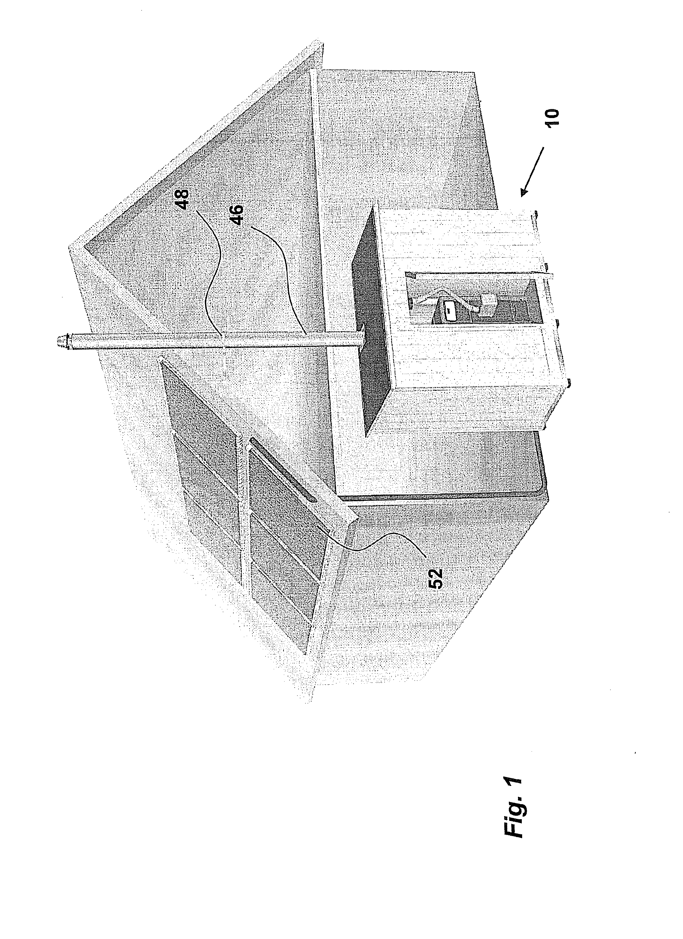

The vertical feeding screw 40 is positioned adjacent a boiler 42 with a pellets burner 43, which is placed such that its front is facing in the forward, outer direction. A sloping feeding tube 44 is positioned between the upper end of the vertical feeding screw 40 and an inlet to the fire place of the burner 43. A chimney 46, Fig. 1, is further connected to the boiler, which is extending vertically through the roof of the module and up to a height above the ridge of the roof of the house. The chimney is provided with a chimney mounting member 48 for attachment to the building, which mounting member 48 comprises an attachment 72 to be fastened to the building. The mounting member is designed to allow for small movements, that may occur after installation, due to subsidence in the foundation of the module, but prevent fast movements due to, for example, wind load. The attachment is arranged with a hinge 74. A damper 76, like a gas damper, is attached to the hinge 74. At the end of the damper 76 a circular mounting bracket 78 is attached, which mounting bracket 78 is in two halves and intended to be fastened around the chimney 46. The chimney mounting member thus allows some movement if the chimney in its axial direction due to the hinge. However forces in the lateral direction are dampened by the damper.

The module 10 further preferably comprises at least one accumulator tank 50 for storing heated water. Also connected to the module 10 of the system are a number of solar panels 52, Fig. 1, that are placed on the roof of the building. Further the system comprises piping 53 interconnecting the boiler, the solar panels and accumulator tank as well as valves 54, circulation pumps 56, expansion tanks 58, as well as sensors 60 of different kinds in order to monitor the operation of the system. The expansion tanks have been chosen such that they require the least space for a certain volume. Since expansion tanks are almost spherical, a number of smaller expansion tanks have been chosen. The system is controlled by a control unit 62 capable of processing the input from the sensors and activating the valves and pumps such that the system is optimized, preferably placed inside the building. Further a computer 63 may be connected to the control unit 62, which enables collection and processing of data from the system for monitoring it. The piping 53 of the system is connected to the interior of the housing and its radiator system 64 and/or floor heating system, if there is a waterborne heating system. If not, then fan convectors 66 may be installed inside the house. The piping is also connected to the tap warm water system 65 of the housing, which also could include a circulating circuit 67.

Further the system may optionally be connected to a swimming pool where especially the solar panels 52 are used for heating the pool water. Then a heat exchanger 68 is placed between the pool water circuit and the system. Also, the space of the module where the boiler and the accumulator tank are placed is insulated in order to reduce energy loss. In any event, the solar panels are the main producers of warm tap water during the sunny periods, and especially during the summer when no heating of the building is required.

An important aspect with the present invention is that there is a modular build-up of different components comprised in a module 10. The heart of each module is the boiler 42 that is placed preferably in the centre. The boiler 42 is placed with its front towards the outer front wall, which is provided with a door 70, Fig. 2 for easy access for service and maintenance. The positioning of the boiler 42 in such a way reduces the space requirements in front of the boiler, which otherwise should be at least one meter of free space. Also the boiler is chosen such that it does not require any access from the sides, which further reduces the space requirements of the module. A further space-saving measure is the use of a vertical feed screw 40 between the pellets storage space 26 and the boiler 42, whereby the boiler may be placed close to the pellets storage space 26.

Further, in line with the modular build-up of the present invention, the size of the pellets storage space 26 may be altered depending on heating demands, and of course the capacity of the boiler 42 may also be altered. A pellets storage space 26 should contain at least 1,5 tons of pellets, since that normally is the smallest quantity that a tank truck will normally deliver. If there is enough space for the module, it is preferable to have a volume containing 3 tons of pellets, which will last for between 3 to 21 months. Because the module will be placed where it is possible in relation to the house, the pellets storage space may be placed either to the left or to the right of the boiler, which provides easy access to the filling connection.

In a most basic configuration, the module contains only a boiler 26 and a pellets storage space 26. Preferably however, the module also comprises the accumulator tank 50. Preferably also the accumulator tank 50 is chosen larger than a traditional hot water boiler, for instance at least 500 litres. In the accumulator, energy from both the solar panels and from the pellets boiler is stored. In this aspect, the pellets boiler could heat water either directly to the heating system of the house or to the accumulator tank, or both. Depending on the requirements, the module could be extended to include more than one accumulator tank 50.

It is to be understood that the embodiment described above and shown in the drawings is to be regarded only as a non-limiting example of the invention and that it may be modified in many ways within the scope of the patent claims.

## Claims

1. Module (10) for heating a building, which module (10) comprises a defined space and being arranged to be placed outside a building and adjacent a wall thereof, the module comprises:
- a boiler (42) with pellets burner (43);
- a pellets storage space (26), which pellets storage space (26) is provided with a pellets filling connection (28);
- pellets feeding means (36, 40) between said pellets storage space (26) and said pellets burner (42);
- piping (53) connected to said boiler (42) and arranged with connection members connectable to piping and heat delivery members (64, 66) arranged inside said building;
- said boiler (42) being designed such that it requires access only from its front and from its top
**characterised in that** said boiler (42) is positioned in said module with its front towards an accessible side (24) of the module, and said pellets storage space (26) is placed inside said module adjacent, beside said boiler (42) and wherein said pellets feeding means (36, 40) comprises a generally vertically arranged feeding screw (40).

2. Module according to claim 1, wherein said module (10) is designed such that said pellets storage space (26) can be placed optionally on either side of said boiler for facilitating connection to said pellets filling connection (28) when filling the storage space with pellets.

3. Module according to claim 1, wherein said piping from said building is drawn through a passage (25) in a floor plate (12) of said module.

4. Module according to any of the preceding claims, wherein it further comprises at least one accumulator tank (50) connected to said piping.

5. Module according to claim 4, wherein said accumulator tank (50) is positioned adjacent said boiler (26) on the opposite side as the pellets storage space.

6. Module according to any of the preceding claims, wherein it further comprises a control system (62) capable of automatically running the heating process.

7. Module according to any of the preceding claims, wherein it further comprises a heat exchanger (68) connected to said piping (53), to which a swimming pool circuit may be connected.

8. Module according to any of the preceding claims, wherein it further comprises a number of small expansion vessels, the total volume of which corresponds to the requirements of a particular heating system of a building.

9. Module according to any of the preceding claims, wherein said piping further comprises piping for hot tap water, also for recirculation of hot tap water.

10. Module according to any of the proceeding claims, wherein it further comprises a chimney (46), provided with a chimney mounting member (48) for attachment to the building, which mounting member is provided with dampening means allowing slow movements but preventing fast wind loads.

11. System for heating a building, comprising a module according to claim 1, as well as solar panels (52) connected to said piping of said module.
